Europäisches Patentamt

European Patent Office

Office européen des brevets

(19)

(11) EP 0 776 698 B1

(12) EUROPÄISCHE PATENTSCHRIFT

(45) Veröffentlichungstag und Bekanntmachung des Hinweises auf die Patenterteilung:
18.07.2001 Patentblatt 2001/29

(51) Int Cl.⁷: **B01J 31/02**, C07F 7/12

(21) Anmeldenummer: 96119065.9

(22) Anmeldetag: 28.11.1996

(54) **Verfahren zur Herstellung von SiH-haltigen Organylchlorsilanen**

Process for preparing Si-H containing chlorosilanes

Procédé de préparation de chlorosilan contenant Si-H

(84) Benannte Vertragsstaaten:
**DE ES FR GB IT**

(30) Priorität: **30.11.1995 DE 19544730**

(43) Veröffentlichungstag der Anmeldung:
**04.06.1997 Patentblatt 1997/23**

(73) Patentinhaber: **Wacker-Chemie GmbH**
**81737 München (DE)**

(72) Erfinder:
• **Geisberger, Gilbert, Dr.**
**84503 Altoetting (DE)**
• **Lindner, Tassilo, Dr.**
**84561 Mehring-Oed (DE)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:
**EP-A- 0 138 670**          **EP-A- 0 216 640**
**US-A- 4 613 491**          **US-A- 5 209 775**
**US-A- 5 247 110**

• **DATABASE WPI Section Ch, Week 9214 Derwent Publications Ltd., London, GB; Class E36, AN 86-255303 XP002025240 & JP-B-04 013 291 (TOA NENRYO KOGYO KK) , 9.März 1992**

**Beschreibung**

Die Erfindung betrifft ein Verfahren zur Herstellung von Organylsilanen, die zumindest einen Si-gebundenen Wasserstoff aufweisen, in der Gegenwart eines Phosphoniumkatalysators.

In US-A 4,746,752, US-A 3,399,222, US-A 4,775,651 und Donald R. Weyenberg et al., in J. Organometal. Chem., 3 (1965), 487-489 werden Verfahren zur Herstellung von Organylsilanen beschrieben, die unter anderem auch in der Gegenwart von einem Phosphoniumkatalysator durchgeführt werden. Allen diesen Verfahren ist zu eigen, daß bei den beschriebenen Komproportionierungsreaktionen der Wasserstoff immer auf die Verbindung übertragen wird, deren Siliciumatom die geringere Anzahl an organischen Substituenten trägt.

Es ist Aufgabe der Erfindung ein verbessertes Verfahren zur Herstellung von SiH-haltigen Organylsilanen zur Verfügung zu stellen, insbesondere ein Verfahren, bei dem das Endprodukt in hohen Ausbeuten erhalten wird und in einer Komproportionierungsreaktion der Wasserstoff auf die Verbindung übertragen wird, deren Siliciumatom die größere oder gleiche Anzahl an organischen Substituenten trägt.

Diese Aufgabe wird durch die Erfindung gelöst.

Gegenstand der Erfindung ist ein Verfahren zur Herstellung von Organylsilanen, die zumindest einen Si-gebundenen Wasserstoff aufweisen, worin eine Komproportionierungsreaktion der Gleichung

$$Z\ R_aSiCl_{4-a} + CH_3SiH_cX_{3-c} \longrightarrow$$

$$Z\ R_aSiH_bCl_{4-a-b} + CH_3SiH_{c-y}X_{3+y-c}$$

wobei

R gleich oder verschieden ist, ein Alkyl-, Aryl, Alkaryl- oder Halogenalkylrest,
X ein Halogenatom, bevorzugt ein Chloridion, Bromidion oder Iodidion bedeutet,
a,b,y und Z = 1 oder 2,
c = 2 oder 3 ist,

in Anwesenheit eines Katalysators der Formel (I)

$$D^+\text{-}E_n\ X^-,$$

wobei $D^+$ eine Gruppe der Formel

$$R^1_{\ m}P^+R^2_{\ 4-m}$$

bedeutet, worin

$R^1$ gleich oder verschieden ist, vorzugsweise einen einwertigen Kohlenwasserstoffrest mit 1 bis 20 Kohlenstoffatomen, besonders bevorzugt mit 4 bis 8 Kohlenstoffatomen, je Rest bedeutet oder zwei Reste R zusammen einen zweiwertigen Kohlenwasserstoffrest mit 4 bis 11 Kohlenstoffatomen, besonders bevorzugt mit 4 bis 6 Kohlenstoffatomen, der gegebenenfalls durch ein Heteroatom unterbrochen ist, bedeuten, $R^2$ einen einwertigen oder zweiwertigen Kohlenwasserstoffrest mit 1 bis 20 Kohlenstoffatomen und X ein Halogenatom bedeutet und
m = 1, 2, oder 3,
n = 0 oder 1 ist, wobei m = 3 ist, wenn n = 1 ist, und E eine Gruppe der Formel

$$-Si(OT)_pR^3_{\ 3-p}$$

bedeutet, wobei

T ein an Sauerstoff gebundener Träger ist und $R^3$ gleich oder verschieden ist, einen einwertigen Kohlenwasserstoffrest mit 1 bis 12 Kohlenstoffatomen bedeutet,
p 1, 2 oder 3 ist,

durchgeführt wird.

Die Erfindung betrifft bevorzugt folgende Komproportionierungsreaktionen:

$$2\ R_aSiCl_{4-a} + MeSiH_3 \rightarrow 2\ R_aSiHCl_{3-a} + MeSiHCl_2$$

$$R_aSiCl_{4-a} + MeSiH_3 \rightarrow R_aSiH_2Cl_{2-a} + MeSiHCl_2$$

$$R_aSiCl_{4-a} + MeSiH_2Cl \rightarrow R_aSiHCl_{3-a} + MeSiHCl_2$$

mit a = 1,2

Besonderers bevorzugt ist die Reaktion:

$$2\ Me_2SiCl_2 + MeSiH_3 \rightarrow 2\ Me_2SiHCl + MeSiHCl_2$$

R kann bei a = 2 gleich oder verschieden sein

Beispiele für R sind Alkylreste, wie Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylrest wie der 2,2,4-Trimethylpentylrest; Nonylreste, wie der n-Nonylrest; Decylreste, wie der n-Decylrest; Dodecylreste, wie der n-Dodecylrest; Tetradecylreste; Hexadecylreste und Octadecylreste, wie der n-Octadecylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste;

Xylylreste und Ethylphenylreste und Aralkylreste, wie der Benzylrest, der α- und β-Phenylrest; Halogenalkylreste, wie der Chlormethyl, 3-Chlorpropyl- und 3-Brompropylrest; Halogenarylreste, wie der o-, m-, p-Chlorphenyl- und Chlortolylrest.

Beispiele für Reste $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylret; Decylreste, wie der n-Decylrest; Dodecylreste, wie der n-Dodecylrest; Tetradecylreste; Hexadecylreste und Octadecylreste, wie der n-Octadecylrest, Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolyreste; Xylylreste und Ethylphenylreste und Aralkylreste, wie der Benzylrest, der alpha- und beta-Phenylethylrest. Beispiel für Reste, bei denen die beiden Reste $R^1$ zusammen einen zweiwertigen Kohlenwasserstoffrest darstellen, sind solche der Formel -$(CH_2)_5$- und -$(CH_2)_4$-.

Bevorzugte Beispiele für $R^1$ sind Alkylreste, wobei wegen der höheren katalytischen Aktivität der n-Butyl-, n-Pentyl-, n-Hexyl-, n-Heptyl- und der n-Octylrest besonders bevorzugt sind.

X bedeutet ein Chlorid-, Bromid- oder Iodidion.

Beispiel für $R^2$ sind zweiwertige Kohlenwasserstoffreste, z. B. Alkylenreste, wie der Methylen-, Ethylen-, n-Propylen-, iso-Propylen-, n-Butylen-, iso-Butylen-, n-Pentylen-, iso-Pentylen-; Hexylenreste, wie der n-Hexylenrest; Heptylenreste, wie der n-Hetptylenrest; Octylenreste, wie der n-Octylenrest und iso-Octylenrete; Nonylenreste, wie der n-Nonylenrest; Decylenreste, wie der n-Decylenrest; Dodecylenreste, wie der n-Dodecylenrest; Tetradecylenreste; Hexadecylenreste und Octadecylenreste, wie der n-Octadecylenrest; Cycloalkylenreste, wie Cyclopentylen-, Cyclohexylen- und Cycloheptylenreste; Arylenresten, wie der Phenylenrest; Alkarylenreste, wie Tolylenreste und Aralkylenreste, wie der Benzylenrest oder die jeweiligen entsprechenden einwertigen Reste, die oben als zweiwertige Reste für $R^2$ definiert wurden.

Bevorzugte Beispiele für $R^2$ als zweiwertige Reste sind Alkylenreste, wobei der n-Propylen-, n-Butylen-, n-Pentylenrest besonders bevorzugt ist.

Bevorzugte Beispiele für $R^2$ als einwertige Reste sind Alkylreste, wobei der n-Butyl- und n-Octylrest besonders bevorzugt sind.

Beispiele für $R^3$ sind Alkylreste, wie der Methyl-, Ethyl-, n-Propyl-, iso-Propyl-, n-Butyl-, iso-Butylrest; Arylreste, wie der Phenylrest; und Alkarylreste, wie o-, m-, p-Tolylreste. Vorzugsweise wegen der leichten Zugänglichkeit sind als Rest $R^3$ der Methylrest, der Ethyl- oder Propylrest, bevorzugt.

Falls bei dem Katalysator der Formel (I)

$$D^+\text{-}E_n\,X^-,$$

wobei $D^+$ eine Gruppe der Formel

$$R^1_m P^+ R^2_{4-m}$$

bedeutet, worin $R^1$ die gleiche Bedeutung wie oben, $R^2$ die obige Bedeutung eines einwertigen Restes hat, und X ein Halogenatom bedeutet, n = 0 ist und m = 1, 2 oder 3 ist, handelt es sich um einen homogenen Katalysator.

Ein derartiger homogener Katalysator ist im Reaktionsmedium löslich. Diese Phosphoniumsalze werden in Reinsubstanz, gelöst in einem hochsiedenden inerten organischen Lösungsmittel, wie Tetralin oder Decalin, oder gelöst in Eduktsilan $R_a SiCl_{4-a}$ eingesetzt.

Besonders bevorzugt ist das $(n\text{-}Butyl)_3(n\text{-}Octyl)PCl$.

Die homogenen Katalysatoren haben den Vorteil, daß sie in Reinsubstanz oder gelöster Form pumpbar sind. Dadurch wird die Raktionsführung einfacher, da der Katalysator auch während des bereits laufenden Verfahrens dosiert werden kann, d.h. bei Bedarf die Katalysatorkonzentration erhöht oder erniedrigt, der Katalysator erneuert oder auch gegen einen anderen homogenen Katalysator ausgetauscht werden kann.

Die Herstellung derartiger homogener Katalysatoren durch Alkylierung tertiärer Phosphine mit Alkylhalogeniden ist literaturbekannt (s. Houben-Weyl, Georg Thieme Verlag, Band XII/1, S. 79-90, 1963).

Ein weiterer Gegenstand der Erfindung ist der bei dem erfindungsgemäßen Verfahren eingesetzte Katalysator der Formel (I) mit n = 1.

Falls bei dem Katalysator der Formel

$$D^+\text{-}E_n\,X^- \qquad\qquad (I)$$

n = 1 ist und $D^+$ und X die oben angegebene Bedeutung haben, handelt es sich um einen heterogenen Katalysator, der auf einem im Reaktionsmedium unlöslichen Träger fixiert ist.

Bevorzugte im Reaktionsmedium unlösliche Träger werden aus der Gruppe bestehend aus Zeolithen, Tonen, porösem Glas, poröser Keramik, Silicaten, porösem Siliciumdioxid, wie gefällter und pyrogener Kieselsäure, porösem Aluminiumoxid und Aluminiumsilikaten ausgewählt.

Bevorzugt wird als Träger offenporiges Sinterglas ($SIRAN^R$, Schott Glaswerke, Mainz) verwendet. Dieses offenporige Sinterglas hat vorzugsweise eine Oberfläche bis 0,4 $m^2/g$, bevorzugt 0,4 $m^2/g$, ein einstellbares Porenvolumen bis 70 %, einen Porendurchmesser von 1,6 $\mu m$ bis 400 $\mu m$ und enthält Silanolgruppen, an die z.B. Silane hydrolysestabil gebunden werden können. Dieser Formkörper kann in Form runder Platten, Rohre, Kugeln, Stäbe, Wabenkörpern und bevorzugt Raschig-Ringen verwendet werden.

Als zweiten bevorzugten Träger werden Formkörper aus porösem Kieselgel (z.B. KC-Siliperl AF-125 von der Fa. Kali-Chemie, Hannover) verwendet. Diese Träger weisen eine spez. Oberfläche von 100-700 m$^2$/g, bevorzugt 200-400 m$^2$/g, einen Porendurchmesser von 2 bis 15 nm, bevorzugt 10-15 nm auf und enthalten Silanolgruppen, an die z. B. Silane hydrolysestabil gebunden werden können.

Die Größe des Formkörpers beträgt vorzugsweise das 0,05- bis 0,2-fache der Größe des Reaktionsgefäßes.

Der Vorteil des hetorogenen Katalysators ist, daß im Gegensatz zum homogenen Katalysator zur Abtrennung der Reaktionsprodukte kein destillativer Schritt notwendig ist, da der heterogene Katalysator im Reaktor verbleibt. Dies ist besonders wichtig bei höhersiedenden Silanen, wie Phenylsilanen, da hier bei der homogen katalysierten Verfahrensweise die Reaktion und Destillation in einem Reaktionsgefäß nicht möglich ist.

Die Herstellung des heterogenen Katalysators erfolgt, indem eine Verbindung der Formel (II)

$$R^1_m P^+ R^2_{4-m} -SiY_p R^3_{3-p} \ X^-$$

worin R$^1$, R$^2$, R$^3$, X dieselbe Bedeutung wie oben haben, m = 3, p = 1, 2 oder 3 ist und Y eine hydrolysierbare Gruppe ist, die gleich oder verschieden sein kann, vorzugsweise in einem inerten Lösungsmittel, wie Toluol, Chlorbenzol oder einem Alkohol, bevorzugt iso-Propanol, bei Temperaturen im Bereich von vorzugsweise 0 bis 200 °C, besonders bevorzugt im Bereich von 50 bis 100 °C, mit einem Träger umgesetzt wird.

Beispiele für hydrolysierbare Gruppen Y sind Alkoxyreste, wie der Methoxy-, Ethoxy-, Propoxy- und Butoxyrest, wobei der Ethoxyrest besonders bevorzugt ist und Halogenatome wie das Chloratom.

Ein Beispiel für eine bevorzugte Verbindung der Formel II ist Triethoxysilyl-3-propyl-N,N,N- tri-butyl-phosphonium-chlorid. Vorzugsweise werden 5 - 40 Gew.-%, insbesondere 25 - 30 Gew.-%, Verbindungen der Formel (II), bezogen auf das Gewicht des unbehandelten Trägers, der als Pulver oder bevorzugt als bereits fertiger Formkörper in Form runder Platten, Rohre, Kugeln, Stäbe, Wabenkörpern und bevorzugt Raschig-Ringen, verwendet werden kann, eingesetzt.

Vorzugsweise wird eine 10 bis 60 %ige, bevorzugt eine 25 bis 35 %ige Lösung der Verbindung der Formel (II) in Alkohol, wie Methanol, bevorzugt iso-Propanol oder anderen inerten Lösungsmitteln wie Toluol, Xylol und Chlorbenzol bezogen auf das Gewicht des unbehandelten Trägers, eingesetzt.

Die Bindung der Verbindung der Formel (II) auf dem Träger erfolgt gegebenenfalls in Gegenwart von Wasser (Bildung von Hydrolysaten der Verbindung der Formel (II); solche Verfahren sind bekannt, vergleiche K.G. Allumet et al., Organometal. Chem. 87, 203 (1975)) und gegebenenfalls in Gegenwart von Additiven, wie Wasserglas, Titanhalogeniden oder Titanalkoholaten, Zirkonhalogeniden oder Zirkonalkoholaten, Aluminiumhalogeniden oder Aluminiumalkoholaten, Siliciumhalogeniden oder Siliciumalkoholaten und Zinnhalogeniden oder Zinnalkoholaten durchgeführt werden, wobei Tetraalkoxysilane, wie Tetramethoxysilan, Tetraethoxysilan, Tetrapropoxysilan und Tetrabutoxysilan bevorzugt sind und das Tetraethoxysilan besonders bevorzugt ist.

Eine weitere Möglichkeit besteht darin, die Verbindung der Formel (II) zunächst partiell zu hydrolysieren und erst in einem zweiten Schritt in Gegenwart des Trägers diese vollständig zu hydrolysieren und damit auf dem Träger zu binden.

Zur Modifizierung der Hydrolysate kann die Hydrolyse auch in Gegenwart von Additiven wie Wasserglas, Titanhalogeniden oder Titanalkoholaten, Zirkonhalogeniden oder Zirkonalkoholaten, Aluminiumhalogeniden oder Aluminiumalkoholaten, Siliciumhalogeniden oder Siliciumalkoholaten und Zinnhalogeniden oder Zinnalkoholaten durchgeführt werden, wobei Tetraalkoxysilane, wie Tetramethoxysilan, Tetraethoxysilan, Tetrapropoxysilan und Tetrabutoxysilan bevorzugt sind und das Tetraethoxysilan besonders bevorzugt ist.

Die Verbindungen zur Modifizierung der Hydrolysate werden bezogen auf die Verbindungen der Formel (II) bevorzugt in Mengen von 1:1 bis 5:1 Mol, besonders bevorzugt 3:1 Mol, eingesetzt.

Beispiele für die bei der Herstellung der Hydrolysate eingesetzten Verbindungen sind

$Si(OEt)_4$ und $(EtO)_3SiCH_2CH_2CH_2PBu_3^+Cl^-$;
$Ti(OBu)_4$ und $(MeO)_3SiCH_2CH_2CH_2PMe_2C_{18}H_{37}^+Cl^-$;
$Na_2SiO_3$ und $(MeO)_3SiCH_2CH_2CH_2PMe_2C_{10}H_{21}^+Cl^-$;
$Al(O-i-Pr)_3$ und $(MeO)_3SiCH_2CH_2CH_2PMe_3^+Cl^-$,

wobei Me einen Methylrest, Et einen Ethylrest, j-Pr einen iso-Propylrest und Bu einen n-Butylrest bedeutet.

Der bei der Reaktion so erhaltene Katalysator wird vorzugsweise bei einer Temperatur von 50 bis 100 °C getrocknet.

Die Katalysatoren können mit an den Träger gebundenen Verbindungen der Formel (II) als Pulver mit einer mittleren Korngrößenverteilung von vorzugsweise 1 μm bis 1 mm, bevorzugt 0,5 bis 1 mm, vorliegen bzw. sind vor oder nach der Bindung der Verbindungen der Formel (II) auf dem Träger in an sich bekannter Weise in Formkörper wie Ringe, Halbringe, Stäbchen, Kugeln, Würfel oder Sättel überführt worden. Bevorzugte Formkörper haben die Form von Ringen, Kugeln oder Würfeln.

Die Formkörper werden aus feinverteiltem Katalysator mit einer mittleren Korngrößenverteilung von 1 μm bis 1 mm geformt, gegebenenfalls unter Zugabe von organischen oder anorganischen Bindern oder unter vernetzender Hydrolyse. Die Formgebung kann mittels Verpressen bei erhöhter Temperatur oder mittels Sintern bei erhöhtem Druck, aber auch mittels eines Extruders und anschließendem Zerkleinern der Profile erfolgen.

Beispiele für organische oder anorganische Binder sind Epoxydharze, Wasserglas, organische Polymere, wie Polyethylen, Polypropylen, Polystyrol, Polyvinylchlorid, Polyacrylat und Polyamid.

Zur Erhöhung der Porosität der geformten Katalysatoren wird den Massen vor der Formgebung vorzugsweise eine wasserlösliche Substanz, wie Natriumchlorid oder Natriumsulfat zugesetzt, welche nach dem Formgebungsschritt herausgelöst wird und somit eine hochaktive Makroporosität ergibt.

Besonders bevorzugt wird als Träger offenporiges Sinterglas (SIRAN[R], Schott Glaswerke, Mainz) verwendet. Dieses offenporige Sinterglas hat vorzugsweise eine Oberfläche bis 0,4 m$^2$/g, bevorzugt 0,4 m$^2$/g, ein einstellbares Porenvolumen bis 70 %, einen Porendurchmesser von 1,6 µm bis 400 µm und enthält Silanolgruppen, an die z.B. Silane hydrolysestabil gebunden werden können. Dieser Formkörper kann in Form runder Platten, Rohre, Kugeln, Stäbe, Wabenkörpern und bevorzugt Raschig-Ringen verwendet werden. Die Größe des Formkörpers beträgt vorzugsweise das 0,05- bis 0,2-fache der Größe des Reaktionsgefäßes.

Bevorzugt werden die Verbindungen der Formel (II) an der Trägeroberfläche gebunden, indem die Formkörper mit Verbindungen der Formel II bevorzugt im Gemisch mit Additiven, wie Siliciumalkoholaten, in Alkohol, wie Ethanol, unter vernetzender Hydrolyse getränkt werden. Dabei werden vorzugsweise 5 - 40 Gew.-%, insbesondere 25 - 35 Gew.-%, Verbindungen der Formel (II), bezogen auf das Gewicht des unbehandelten Trägers, der als Pulver oder bevorzugt als bereits fertiger Formkörper in Form runder Platten, Rohre, Kugeln, Stäbe, Wabenkörpern und bevorzugt Raschig-Ringen, verwendet werden kann, eingesetzt. Vorzugsweise wird eine 10 bis 60 %ige, bevorzugt eine 25 bis 35 %ige Lösung der Verbindung der Formel (II) in Alkohol, wie Methanol, bevorzugt Ethanol oder anderen inerten Lösungsmitteln, wie Toluol eingesetzt.

Die Verbindung der Formel (II) wird bevorzugt mit einer Verbindung zur Modifizierung der Hydrolysate, wie Siliciumalkoholaten in Mengen von 1 : 1 bis 1 : 5 Mol, bevorzugt 1 : 3 Mol, eingesetzt. Die anschließende vernetzende Hydrolyse wird durch Zugabe von verdünnter Salzsäure und Steigerung der Reaktionstemperatur bis maximal 100°C, wobei das Lösungsmittel abdestilliert und der Katalysator als Rückstand verbleibt, erreicht. Zur vollständigen Trocknung wird der Katalysator bis 90°C mit Luft gespült.

Der erfindungsgemäße Katalysator hat vorzugsweise die Gestalt eines Formkörpers und bevorzugt die 0,05- bis 0,2-fache Größe des Durchmessers des Reaktionsgefäßes.

Die Phosphoniumkatalysatoren zeichnen sich bei den erfindungsgemäßen Verfahren durch eine ausgezeichnete thermische Stabilität in den verschiedenen Organylchlorsilanmedien und durch eine hohe katalytische Aktivität bei den erfindungsgemäßen Komproportionierungsreaktionen aus.

Vorzugsweise wird das bei dem erfindungsgemäßen Verfahren eingesetzte Methylsilan und/oder Methylchlorsilan durch Disproportionierungsprodukte von Methyldichlorsilan in Gegenwart eines Katalysators wie in US-A 4,870,200 hergestellt.

Das bei dem erfindungsgemäßen Verfahren vorzugsweise verwendete Methylsilan und Methylchlorsilan kann auch nach anderen Verfahren hergestellt werden.

Als zweiten bevorzugten Träger werden Formkörper aus porösem Kieselgel (z. B. KC-Siliperl AF-125 von der Fa. Kali-Chemie, Hannover) verwendet. Diese Träger weisen eine spez. Oberfläche von 100-700 m$^2$/g, bevorzugt 200-400 m$^2$/g, einen Porendurchmesser von 2 bis 15 nm, bevorzugt 10-15 nm auf und enthalten Silanolgruppen, an die z. B. Silane hydrolysestabil gebunden werden können.

Bevorzugt werden die Verbindungen der Formel (II) an der Trägeroberfläche gebunden, indem die Formkörper mit Verbindungen der Formel (II) in Alkohol, wie iso-Propanol, unter vernetzender Hydrolyse getränkt werden. Dabei werden vorzugsweise 10-60 Gew.-%, insbesondere 30-50 Gew.-%, Verbindungen der Formel (II), bezogen auf das Gewicht des unbehandelten Trägers, der als Pulver oder bevorzugt als bereits fertiger Formkörper besonders bevorzugt in Form von Kugeln verwendet werden kann, eingesetzt. Vorzugsweise wird eine 5 bis 60 %ige, bevorzugt eine 10 bis 30 %ige Lösung der Verbindung der Formel (II) in Alkohol, bevorzugt iso-Propanol, oder anderen inerten Lösungsmitteln, wie Toluol, eingesetzt. Die vernetzende Hydrolyse wird durch Zugabe von wäßrigem Ammoniak und Steigerung der Reaktionstemperatur bis max. 100 °C erreicht. Anschließend wird die überstehende Lösung abdekantiert und der als Rückstand verbleibende Katalysator gewaschen und getrocknet.

Das bei dem erfindungsgemäßen Verfahren eingesetzte Methylsilan kann beispielsweise aus Methylhydrogensiloxanen nach dem in E.L. Zicky, J. Organometal. Chem. 4, 411-412 (1965), beschriebenen Verfahren oder durch Hydrierung von Methylchlorsilanen mit Metallhydriden gemäß W. Noll, Chemie und Technologie der Silicone, Verlag Chemie, Weinheim, 2. Auflage, Seiten 76 bis 77, 1968, hergestellt werden.

Die Silan-Edukte werden in gasförmiger oder flüssiger Form oder gelöst in einem inerten organischen Lösungsmittel, wie Hexan, Toluol, Xylol oder Chlorbenzol, eingesetzt.

Bei einer bevorzugten homogenen Verfahrensweise wird das senkrecht stehende, thermostatisierte Reaktionsrohr mit dem Katalysator der Formel

$$D^+\text{-}E_n\ X^-,$$

wobei $D^+$ eine Gruppe der Formel

$$R^1{}_m P^+ R^2{}_{4-m}$$

ist, worin $R^1$ und $R^2$ die gleiche Bedeutung wie oben haben und X ein Halogenatom ist, n = 0 ist und m = 1, 2 oder 3 ist, gegebenenfalls mit Lösungsmittel, befüllt und Methylsilan und/oder Methylchlorsilan zusammen mit dem Silan $R_a SiCl_{4-a}$ bei einem Druck von vorzugsweise 0,1 bis 20 bar, bevorzugt 1 bis 3 bar und einer Temperatur von vorzugsweise 0 bis 250 °C, bevorzugt 50 bis 120 °C, eingeleitet. Das Edukt-Molverhältnis bei Methylsilan/$R_a SiCl_{4-a}$ beträgt bevorzugt 0,1 bis 10, besonders bevorzugt 0,3 bis 1,0. Das Edukt-Molverhältnis bei Methylchlorsilan/$R_a SiCl_{4-a}$ beträgt bevorzugt 0,1 bis 15, besonders bevorzugt 0,5 bis 1,5. Die Katalysator-Konzentration im Silan beträgt vorzugsweise 0,1 bis 80 Gew.-%, bevorzugt 2 bis 60 Gew.-%, besonders bevorzugt 30 bis 60 Gew.-%. Bei der Herstellung von SiH-haltigen Organylchlorsilanen mit niedrigen Siedepunkten (z. B. $Me_2SiHCl$ oder $EtSiHCl_2$) destillieren die Silane aus dem Reaktionsrohr (Füllstand bleibt konstant), das Reaktionsgemisch wird kondensiert und anschließend durch fraktionierte Detillation aufgetrennt. Bei Organylchlorsilanen mit höheren Siedepunkten wird das Reaktionsgemisch an einem Überlauf im oberen Reaktorteil abgenommen. Der Katalysator wird dadurch mit ausgeschleust. Um die Katalysatorkonzentration im Reaktor konstant zu halten, wird die entsprechende Menge im Edukt-Silan $R_a SiCl_{4-a}$ gelöst und dosiert.

Bei einer zweiten bevorzugten Verfahrensvariante wird oder heterogene Katalysator in feinverteilter Form in einem Fest- oder Wirbelbett oder vorzugsweise als Formkörper vorliegend in einem thermostatisierten Rohr eingesetzt. Bei der Anordnung des Katalysators als Formköper wird Methylsilan und/oder Metylhlchlorsilan zusammen mit dem Silan $R_a SiCl_{4-a}$ bei einem Druck von vorzugsweise 0,1 bis 20 bar, bevorzugt 1 bis 3 bar und einer Temperatur von vorzugsweise 0 bis 250 °C, bevorzugt 100 bis 120 °C, eingeleitet. Das Edukt-Molverhältnis bei Methylsilan/$R_a SiCl_{4-a}$ beträgt bevorzugt 0,1 bis 10, besonders bevorzugt 0,3 bis 1,0. Das Edukt-Molverhältnis bei Methylchlorsilan/$R_a SiCl_{4-a}$ beträgt bevorzugt 0,1 bis 15, besonders bevorzugt 0,5 bis 1,5. Das erhaltene Reaktionsgemisch wird anschließend durch fraktionierte Destillation aufgetrennt. Durch Wahl eines geeigneten Eduktverhältnisses Methylsilan/ Organylchlorsilan kann das meist als Zielprodukt gewünschte monohydrierte Silan $R_a SiHCl_{3-a}$ (z. B. $Me_2SiHCl$ oder $PhSiHCl_2$) in hohen Ausbeuten erhalten werden. Durch Erhöhen des Eduktverhältnisses ist auch die Herstellung von Dihydrogensilanen möglich (z. B. $PhSiH_2Cl$).

Das erfindungsgemäße Verfahren kann absatzweise, halbkontinuierlich oder vollkontinuierlich durchgeführt werden. Vorzugsweise wird es vollkontinuierlich durchgeführt. Die SiH-haltigen Organylchlorsilane sind wertvolle Ausgangsverbindungen zur Herstellung von funktionellen Silanen oder Siloxanen, die über eine Hydrosilylierungsreaktion mit aliphatischen Doppel- oder Dreifachbindungen aufweisenden organischen Verbindungen erhalten werden. Eine weitere Verwendung von beispielsweise Dimethylchlorsilan ist die Herstellung von Dimethylhydrogensilylgruppen aufweisenden Organopolysiloxanen, die bei additionsvernetzenden Siliconkautschuk-Zusammensetzungen eingesetzt werden.

Auch das als Nebenprodukt, hauptsächlich bei der Disproportionierung von Methyldichlorsilan, anfallenden Methyltrichlorsilan kann auf wirtschaftliche Weise verwertet werden, beispielsweise zur Herstellung von durch Flammenhydrolyse erzeugter, hochdisperser Kieselsäure.

Beispiel 1:

Herstellung des heterogenen Katalysators: 100 g poröses Siliciumdioxid in Kugelform von Durchmesser 3 - 5 mm, KC-Siliperl AF 125 (Kali-Chemie, Hannover, BRD), wurde mit einer Lösung von 50 g Triethoxysilylpropyltributylphosphoniumchlorid (hergestellt durch die äquimolare Reaktion von Tributylphosphin mit Chlorpropyltriethoxysilan bei 110 °C/ 2 Tage) und 10 ml wäßrigen Ammoniak (25%ig) in 400 ml iso-Propanol versetzt und 24 Stunden bei 80 °C gehalten. Anschließend wurde von den Lösungsmitteln abfiltriert und der nunmehr funktionalisierte Träger getrocknet (Gewichtszunahme durch Beschichtung 14,4 %).

Beispiel 2:

Der nach Beispiel 1 hergestellte Katalysator wurde in ein senkrecht stehendes thermostatisiertes Rohr (2,4 cm Durchmesser, 150 cm Länge) bis zu einer Höhe von 120 cm eingefüllt. Bei einer Säulentemperatur von 61 °C wurden kontinuierlich 100 g/h Dimethyldichlorsilan flüssig und 6 l/h Methylsilan gasförmig am Boden der Blasensäule zugeführt. Das am Kopf der Säule austretende Destillat wurde kondensiert und die Zusammensetzung $^1$H-NMR-spektroskopisch bestimmt.

| $MeSiH_3$ | 8 Mol% | $Me_2SiH_2$ | 1 Mol% |
|---|---|---|---|
| $MeSiH_2Cl$ | 9 Mol% | $Me_2SiHCl$ | 23 Mol% |
| $MeSiHCl_2$ | 9 Mol% | $Me_2SiCl_2$ | 51 Mol% |
| $MeSiCl_3$ | 0 Mol% | | |

Beispiel 3:

Ein senkrecht stehendes, beheizbares Rohr aus V4A-Stahl, einem Innendurchmesser von 5 cm und einer Gesamtlänge von 250 cm, wurde mit V4A-Stahl-Interpak-10-Füllkörpern befüllte Als Katalysator bei der folgenden Umsetzung wurde Bu$_3$OctylPCl (hergestellt durch äquimolare Reaktion von Bu$_3$P mit Octylchlorid bei 110 °C/48 h) in Form einer 2 %ige Lösung in PhSiCl$_3$ eingesetzt.

Bei einem Gesamtdruck von 2,2 bar (abs.) und einer Innentemperatur von 70 °C dosierte man in das untere Ende der Reaktionssäule kontinuierlich 1400 g/h der PhSiCl$_3$/Bu$_3$OctylPCl-Lösung flüssig und 69 g/h MeSiH$_3$ gasförmig.

Bei der Säulenhöhe von ca. 200 cm wurde das Produktgemisch flüssig abgenommen und $^1$H-NMR-spektroskopisch die Zusammensetzung bestimmt.

| | | | |
|---|---|---|---|
| MeSiH$_2$Cl | 0 Mol% | PhSiH$_2$Cl | 3 Mol% |
| MeSiHCl$_2$ | 8 Mol% | PhSiHCl$_2$ | 43 Mol% |
| MeSiCl$_3$ | 10 Mol% | PhSiCl$_3$ | 36 Mol% |

Damit fielen 610 g/h des Zielproduktes PhSiHCl$_2$ an, der Umsatz des eingesetzten PhSiCl$_3$ betrug 52 %. Das Produktgemisch wurde destillativ aufgearbeitet, wobei PhSiHCl$_2$ in 97 %iger Reinheit erhalten wurde.

Beispiel 4:

Versuchsdurchführung wie in Beispiel 3, doch anstelle von 69 wurden 133 g/h MeSiH$_3$ dosiert. Das Produktgemisch wies folgende Zusammensetzung auf:

| | | | |
|---|---|---|---|
| MeSiH$_2$Cl | 2 Mol% | PhSiH$_3$ | 1 Mol% |
| MeSiHCl$_2$ | 20 Mol% | PhSiH$_2$Cl | 11 Mol% |
| MeSiCl$_3$ | 8 Mol% | PhSiHCl$_2$ | 48 Mol% |
| | | PhSiCl$_3$ | 11 Mol% |

Bei diesen Versuchsbedingungen entstanden 815 g/h PhSiHCl$_2$, der PhSiCl$_3$-Umsatz zu PhSiHCl$_2$ betrug 69 %.

Beispiel 5:

Ein senkrecht stehendes thermostatisiertes Rohr (2,4 cm Durchmesser, 150 cm Höhe) wurde vollständig mit dem nach Beispiel 1 hergestellten Katalysator befüllt. Bei einer Säulentemperatur von 70 °C wurden kontinuierlich 150 g/h Diphenyldichlorsilan flüssig und ca. 5 l/h Methylsilan gasförmig am Boden der Blasensäule zugeführt. Das am Kolonnenkopf austretende Flüssigkeit/Gas-Gemisch wurde auf Raumtemperatur abgekühlt und die Zusammensetzung des Silan-Gemisches $^1$H-NMR-spektroskopisch bestimmt:

| | | | |
|---|---|---|---|
| MeSiH$_3$ | 7 Mol% | Ph$_2$SiH$_2$ | 1 Mol% |
| MeSiH$_2$Cl | 12 Mol% | Ph$_2$SiHCl | 33 Mol% |
| MeSiHCl$_2$ | 10 Mol% | Ph$_2$SiCl$_2$ | 36 Mol% |
| MeSiCl$_3$ | 1 Mol% | | |

Damit fielen 61 g/h des Zielproduktes Ph$_2$SiHCl an, welches nach destillativer Aufarbeitung in 95 %iger Reinheit anfiel.

Beispiel 6:

Ein senkrecht stehender, beheizbarer Reaktor aus V4A-Stahl, mit einem Innendurchmesser von 40 cm und einer Gesamtlänge von 500 cm wurde bis zu einer Höhe von 200 cm mit V4A-Pallringen (1 Zoll) befüllt. Als Katalysator wurden 100 kg Bu$_4$PCl in Form einer 50 %igen Lösung in Me$_2$SiCl$_2$ in den Reaktor gepumpt. Bei einem Gesamtdruck von 1,9 bar und einer Innentemperatur von 82 °C wurden in das untere Ende des Reaktors kontinuierlich 7 kg/h MeSiH$_3$ und 85 kg/h Me$_2$SiCl$_2$ dosiert. Die Füllhöhe der Blasensäule wurde dadurch konstant gehalten und das am Kopf des Reaktors anfallende Produktgemisch wurde einer kontinuierlich betriebenen Destillationskolonne zugeführt. Am Kopf dieser Kolonne wurde MeSiH$_3$ sowie MeSiH$_2$Cl gasförmig abgezogen und dem Reaktor zur weiteren Abreaktion zurückgeführt. Am unteren Ende der Kolonne wurden kontinuierlich 92 kg/h Silangemisch in flüssiger Form mit folgender Zusammensetzung abgezogen:

| | |
|---|---|
| MeSiH$_2$Cl | 0,2 Gew.-% |
| Me$_2$SiHCl | 27,3 Gew.-% |
| MeSiHCl$_2$ | 17,7 Gew.-% |
| MeSiCl$_3$ | 0,6 Gew.-% |
| Me$_2$SiCl$_2$ | 54,2 Gew.-% |

Dieses Silangemisch wurde destillativ weiter aufgearbeitet, wobei Me$_2$SiHCl in 99 %iger Reinheit erhalten wurde. Der Reaktor konnte über einen Zeitraum von 3 Monaten betrieben werden, ohne daß eine Abnahme der katalytischen Aktivität festgestellt werden konnte.

Die Bedeutung von Me ist eine Methyl-, von Bu ist eine Butyl-, von Ph ist eine Phenylgruppe und P bedeutet Phosphor.

**Patentansprüche**

1. Verfahren zur Herstellung von Organylsilanen, die zumindest einen Si-gebundenen Wasserstoff aufweisen, worin eine Reaktion der Formel

$$Z\ R_a SiCl_{4-a} + CH_3 SiH_c X_{3-c} \longrightarrow$$

$$Z\ R_a SiH_b Cl_{4-a-b} + CH_3 SiH_{c-y} X_{3+y-c}$$

wobei

R gleich oder verschieden ist, ein Alkyl-, Aryl, Alkaryl- oder Halogenalkylrest,

X ein Halogenatom bedeutet,
a,b,y und Z = 1 oder 2,
c = 2 oder 3 ist,

in Anwesenheit eines Katalysators der Formel

$$D^+-E_n\,X^-,$$

wobei $D^+$ eine Gruppe der Formel (I)

$$R^1{}_mP^+R^2{}_{4-m}$$

bedeutet, worin

R$^1$ gleich oder verschieden ist, einen einwertigen Kohlenwasserstoffrest mit 1 bis 20 Kohlenstoffatomen je Rest bedeutet oder zwei Reste R zusammen einen zweiwertigen Kohlenwasserstoffrest mit 4 bis 11 Kohlenstoffatomen, der gegebenenfalls durch ein Heteroatom unterbrochen ist, bedeuten,
R$^2$ einen einwertigen oder zweiwertigen Kohlenwasserstoffrest mit 1 bis 20 Kohlenstoffatomen
und X ein Halogenatom bedeuten und
m = 1, 2, oder 3,
n = 0 oder 1 ist, wobei m = 3 ist, wenn n = 1 ist, und E eine Gruppe der Formel

$$-Si(OT)_pR^3{}_{3-p}$$

bedeutet, wobei

T ein an Sauerstoff gebundener Träger ist und R$^3$ einen einwertigen Kohlenwasserstoffrest mit 1 bis 12 Kohlenstoffatomen bedeutet,
p = 1, 2 oder 3 ist,

durchgeführt wird.

2. Verfahren nach Anspruch 1, dadurch gekennzeichnet, daß der Träger, an den der Katalysator gebunden ist, aus der Gruppe bestehend aus Zeolithen, Tonen, porösem Glas, poröser Keramik, Silicaten, porösem Siliciumdioxid, wie gefällter und pyrogener Kieselsäure, porösem Aluminiumoxid und Aluminiumsilikaten ausgewählt wird.

**Claims**

1. Process for preparing organosilanes which contain at least one Si-bonded hydrogen, which comprises carrying out a reaction according to the equation

$$Z\,R_aSiCl_{4-a} + CH_3SiH_cX_{3-c} \longrightarrow$$

$$Z\,R_aSiH_bCl_{4-a-b} + CH_3SiH_{c-y}X_{3+y-c}$$

where

R are identical or different and are each an alkyl, aryl, alkaryl or haloalkyl radical,
X is a halogen atom,
a, b, y and Z = 1 or 2,
c = 2 or 3,

in the presence of a catalyst of the formula

$$D^+-E_n\,X^-,$$

where $D^+$ is a group of the formula (I)

$$R^1{}_mP^+R^2{}_{4-m},$$

where

R$^1$ are identical or different and are each a monovalent hydrocarbon radical having from 1 to 20 carbon atoms per radical or two radicals R together form a divalent hydrocarbon radical having from 4 to 11 carbon atoms, which may be interrupted by a heteroatom,
R$^2$ is a monovalent or divalent hydrocarbon radical having from 1 to 20 carbon atoms
and X is a halogen atom and
m = 1, 2 or 3,
n = 0 or 1, where m = 3, when n = 1,

and E is a group of the formula

$$-Si(OT)_pR^3{}_{3-p},$$

where

T is a support bound to oxygen and
R$^3$ is a monovalent hydrocarbon radical having from 1 to 12 carbon atoms,
p = 1, 2 or 3.

2. Process according to Claim 1, characterized in that the support to which the catalyst is bound is selected from the group consisting of zeolites, clays, porous glass, porous ceramic, silicates, porous silicon dioxide such as precipitated and pyrogenic silica, porous aluminium oxide and aluminium silicates.

**Revendications**

1.  Procédé de préparation d'organosilanes renfermant au moins un hydrogène lié au silicium, dans lequel une réaction selon l'équation

$$Z\,R_a\,SiCl_{4-a} + CH_3SiH_cX_{3-c} \longrightarrow$$

$$Z\,R_a\,SiH_bCl_{4-a-b} + CH_3SiH_{c-y}X_{3+y-c}$$

dans laquelle

R est identique ou différent et représente un radical alkyle, aryle, alkaryle ou halogénoalkyle,
X représente un atome d'halogène,
a, b, y et Z valent 1 ou 2,
c vaut 2 ou 3,

est réalisée en présence d'un catalyseur de formule

$$D^+\text{-}E_n\,X^-,$$

dans laquelle $D^+$ représente un groupe de formule (I)

$$R^1{}_m P + R^2{}_{4-m}$$

dans laquelle

$R^1$ est identique ou différent et représente un radical hydrocarboné monovalent ayant de 1 à 20 atomes de carbone par radical ou deux radicaux R représentent conjointement un radical hydrocarboné bivalent ayant de 4 à 11 atomes de carbone, qui est éventuellement interrompu par un hétéroatome,
R2 représente un radical hydrocarboné monovalent ou bivalent ayant de 1 à 20 atomes de carbone
et X représente un atome d'halogène, et
m vaut 1, 2 ou 3,
n vaut 0 ou 1, où m vaut 3 lorsque n vaut 1,

et E représente un groupe de formule

$$\text{-Si(OT)}_p R^3{}_{3-p}$$

dans laquelle

T est un support lié à l'oxygène et
$R^3$ représente un radical hydrocarboné monovalent ayant de 1 à 12 atomes de carbone,
p vaut 1, 2 ou 3.

2.  Procédé selon la revendication 1, caractérisé en ce que le support auquel le catalyseur est lié est choisi parmi le groupe constitué de zéolites, d'argiles, de verre poreux, de céramique poreuse, de silicates, de dioxyde de silicium poreux tel que de l'acide silicique précipité et pyrogène, de l'oxyde d'aluminium poreux et de silicates d'aluminium.